# FASCICULE DE BREVET EUROPEEN

(11) **EP 2 933 186 B1**
(45) Date de publication et mention de la délivrance du brevet: **06.07.2016**
(21) Numéro de dépôt: 15000848.0
(22) Date de dépôt: 23.03.2015
(51) Int. Cl.: B64C 27/64, F15B 15/14

(54) **SYSTÈME HYDRAULIQUE D'AÉRONEF COMPRENANT AU MOINS UNE SERVOCOMMANDE, ROTOR ET AÉRONEF ASSOCIÉS**
HYDRAULISCHES SYSTEM EINES LUFTFAHRZEUGS, DAS MINDESTENS EINE SERVOSTEUERUNG UMFASST, SOWIE ENTSPRECHENDER ROTOR UND ENTSPRECHENDES LUFTFAHRZEUG
HYDRAULIC AIRCRAFT SYSTEM INCLUDING AT LEAST ONE SERVO, ASSOCIATED ROTOR AND AIRCRAFT

(30) Priorité: 18.04.2014 FR 1400938
(43) Date de publication de la demande: 21.10.2015
(73) Titulaire: Airbus Helicopters, 13725 Marignane Cedex (FR)
(72) Inventeur: Bihel, Jean-Romain, F-13740 LE Rove (FR); Coïc, Clément, F-13090 AIX EN Provence (FR); Marger, Thibaut, F-13180 Gignac-LA-Nerthe (FR); Couderc, Gérard, F-13127 Vitrolles (FR)
(74) Mandataire: GPI & Associés

(56) Documents cités:
- FR-A1- 2 313 603
- GB-A- 2 026 406
- US-A- 2 861 640
- US-A- 3 007 530
- US-A- 3 080 002
- US-A- 4 105 365
- US-A- 5 387 083

## Description

La présente invention concerne un système hydraulique d'aéronef comprenant au moins une servocommande, ainsi qu'un rotor et un aéronef munis de ce système hydraulique.

Classiquement, un aéronef comporte des organes de manoeuvre, tels que les pales d'un rotor de sustentation d'un giravion ou encore des gouvernes de direction d'un avion par exemple.

A l'aide de commandes de vol, le pilote contrôle donc les organes de manoeuvre de l'aéronef. Toutefois, les efforts à fournir sont parfois très importants pour déplacer ces organes de manoeuvre.

Par suite, la chaîne cinématique reliant une commande de vol à un organe de manoeuvre est souvent munie d'un système hydraulique comprenant une servocommande permettant au pilote de gouverner l'aéronef sans difficulté et avec précision.

Plus particulièrement, un giravion est muni d'un rotor principal assurant au moins partiellement la sustentation voire la propulsion du giravion. Pour diriger le giravion, un pilote peut notamment modifier le pas des pales du rotor principal.

Par suite, le giravion comporte un ensemble de plateaux pourvu d'un plateau inférieur non tournant et d'un plateau supérieur tournant. Cet ensemble est dénommé « ensemble de plateaux cycliques » par la suite. Par contre cet ensemble de plateaux cycliques est parfois plus simplement dénommé « plateaux cycliques » par l'homme du métier. Le plateau inférieur non tournant est relié aux commandes de vol du pilote, généralement par au moins trois chaînes de commande distinctes alors que le plateau supérieur tournant est relié à chaque pale respectivement par une bielle. L'ensemble de plateaux cycliques coulisse ainsi le long du mât du rotor principal pour commander le pas collectif des pales du rotor principal. De plus, cet ensemble de plateaux cycliques peut osciller autour d'une rotule coulissant sur le mât pour commander le pas cyclique des pales.

Les oscillations et la translation de l'ensemble de plateaux cycliques sont donc à l'origine de la variation du pas des pales permettant à un pilote de diriger un giravion notamment.

Le pilote commande parfois l'ensemble de plateaux cycliques via des commandes mécaniques. Toutefois, les efforts à exercer par le pilote pour manoeuvrer l'ensemble de plateaux cycliques sont très importants, en particulier si la masse du giravion est également importante.

Par conséquent, une servocommande est agencée entre une portion amont et une portion aval de chaque chaîne cinématique de commande. Le pilote sollicite alors les servocommandes sans effort particulier via la portion amont, puis ces servocommandes retranscrivent l'ordre du pilote et agissent sur la portion aval de la chaîne cinématique.

De même, un hélicoptère est pourvu d'un rotor arrière dont le pas des pales peut être modifiable via une servocommande pour contrôler les mouvements en lacet de l'appareil.

Bien entendu, il en va par exemple de même pour des ailerons ou des volets d'avions manoeuvrés via des servocommandes.

De façon usuelle, les servocommandes comportent un vérin muni d'au moins un corps externe et d'une tige de puissance. La tige de puissance comporte alors un piston de commande. Chaque piston de commande peut translaté dans chaque corps. Ainsi, chaque piston de commande délimite une chambre de rétraction et une chambre d'extension à l'intérieur de chaque corps externe.

De plus, la servocommande comporte un distributeur hydraulique alimentant en fluide la chambre de rétraction ou la chambre d'extension suivant l'ordre reçu.

L'ordre de pilotage d'un pilote est donc transmis au distributeur hydraulique, ce distributeur hydraulique alimentant en fluide les chambres hydrauliques appropriées. En fonction des ordres donnés, le distributeur hydraulique alimente donc en fluide hydraulique chaque chambre de rétraction ou chaque chambre d'extension et induit par suite la rétraction ou l'extension de la servocommande.

On comprend que l'on appelle dans la suite du texte « chambre de rétraction » une chambre provoquant la rétraction de la servocommande lorsque ladite chambre est remplie par un fluide. A l'inverse, on appelle « chambre d'extension » une chambre provoquant l'extension de la servocommande lorsque ladite chambre est remplie par un fluide.

La servocommande peut de plus comprendre un dispositif d'asservissement, éventuellement intégré au distributeur hydraulique.

La servocommande comporte alors de multiples joints dynamiques agencés sur les parties mobiles.

Un premier joint dynamique peut être agencé sur chaque piston de commande. Un tel joint dynamique a pour fonction d'empêcher un passage non désiré de fluide de la chambre de rétraction vers la chambre d'extension d'un corps.

Une fuite d'un premier joint dynamique peut générer une dégradation des performances de la servocommande

Un deuxième joint dynamique est aussi agencé entre la tige de puissance et chaque corps de la servocommande.

Une fuite de ce deuxième joint dynamique induit un échappement de fluide vers l'extérieur de la servocommande, et par suite vers d'autres équipements. La fuite est détectable par un contrôle visuel et induit la réparation de la servocommande.

Un cas de panne d'une servocommande est ainsi relatif à l'usure d'au moins un joint, cette usure provoquant une fuite.

Une servocommande comporte alors parfois un dispositif de détection surveillant la pression du fluide du circuit hydraulique pour détecter une telle fuite importante. Si une fuite importante est détectée, l'utilisateur en est averti et peut donc mettre en oeuvre les mesures préconisées par le constructeur.

Sur un aéronef, il est courant d'utiliser des servocommandes à au moins deux corps, notamment par sécurité. Ainsi, si un corps devient inopérant suite à une fuite accidentelle, la servocommande peut demeurer fonctionnelle.

Il est effectivement envisageable d'être confronté à des pannes dites « dormantes », particulièrement sur une servocommande pourvue d'au moins deux corps.

En effet, une telle panne dormante peut apparaître dans l'hypothèse d'une fuite d'un premier joint dynamique. Une telle fuite intermédiaire peut par exemple permettre le passage indu du fluide hydraulique entre la chambre de rétraction et la chambre d'extension correspondante d'un corps.

Dans ces conditions, un pilote risque de ne pas s'apercevoir physiquement du dysfonctionnement de la servocommande dans la mesure où au moins un autre corps de cette servocommande demeure opérationnel.

Pour détecter de telles pannes dormantes, un constructeur peut prévoir des opérations de maintenance complètes effectuées à des intervalles de temps réguliers. Ces opérations de maintenance ont un coût non négligeable.

En résumé, une servocommande est classiquement munie de joints dynamiques susceptibles d'induire des fuites indues en cas de détérioration.

Or, l'utilisation de la servocommande induit l'échauffement des joints dynamiques par frottement. Suivant la fréquence de manoeuvre de la servocommande, cet échauffement dégrade les joints dynamiques et engendre leur destruction.

La présence de joints dynamiques limite donc de fait les performances de la servocommande.

Les documents GB 2 026406, US 2861640, FR 2313603, US 4105365, US 5387083 et US 3007530 sont connus.

US2861640 divulgue un système hydraulique selon le préambule de la revendication 1.

La présente invention a alors pour objet de proposer un système hydraulique d'aéronef comprenant au moins une servocommande, en particulier une servocommande agissant sur des organes de manoeuvre d'un aéronef.

Ce système hydraulique vise à limiter des limitations imposées aux servocommandes résultant des fuites de joints dynamiques. De telles limitations peuvent notamment induire des coûts récurrents de maintenance élevés voire une réduction des performances des servocommandes.

Selon l'invention, un système hydraulique d'aéronef comprend au moins une servocommande, chaque servocommande comportant au moins un corps ainsi qu'une tige de puissance et un piston agencé dans chaque corps, une tige de puissance d'une servocommande étant solidaire de chaque piston de la servocommande et traversant chaque corps de la servocommande.

De plus, au moins une servocommande présente entre chaque corps de cette servocommande et la tige de puissance de cette servocommande un moyen d'étanchéité principal à fuite maitrisée autorisant une fuite d'un fluide hydraulique en dehors dudit corps, ledit système hydraulique comportant au moins une enceinte fermée, chaque corps de ladite servocommande étant agencé dans ladite enceinte afin que ledit fluide soit recueilli dans ladite enceinte.

Une telle servocommande est dite « servocommande à fuite maitrisée » par commodité compte tenu de la nature du moyen d'étanchéité principal.

Par suite, l'invention propose d'une part de réaliser une servocommande présentant des fuites maitrisées et prédéfinies par le constructeur, et d'autre part d'agencer au moins partiellement cette servocommande dans une enceinte.

Par rapport à certaines servocommandes, une servocommande à fuite maitrisée ne présente plus un joint dynamique d'étanchéité isolant l'intérieur d'un corps d'un milieu extérieur à la servocommande.

Au lieu d'implémenter un joint dynamique étanche ne devant générer aucun suintement, la servocommande à fuite maitrisée possède un moyen d'étanchéité principal tolérant un suintement prédéterminé par le constructeur.

Ainsi, cette servocommande à fuite maitrisée ne risque pas d'être démontée d'un aéronef suite à un début de fuite vers un milieu externe, une telle fuite étant au contraire prévue par le constructeur. Cette caractéristique permet d'optimiser la maintenance et réduit les risques de voir un client insatisfait suite à une fuite non prévue.

Dès lors, la servocommande à fuite maitrisée est agencée dans une enceinte fermée qui est séparée et éventuellement sans contact avec l'air ambiant extérieur à la servocommande.

Le fluide hydraulique s'échappant de la servocommande à fuite maitrisée est donc contenu dans un espace prévu à cet effet. Ainsi, le fluide hydraulique recueilli par l'enceinte peut être redirigé vers un circuit hydraulique.

En outre, d'autres équipements de l'aéronef peuvent être présents dans l'enceinte accueillant au moins une servocommande à fuite maitrisée. Le fluide s'échappant d'une servocommande peut alors permettre de lubrifier ces équipements.

Par exemple, l'enceinte peut accueillir des organes usuels d'un rotor de giravion, tel que des compas de plateaux cycliques, un ensemble de plateaux cycliques, des pièces de guidage...

Le système hydraulique permet alors de limiter et de maitriser les usures de certains de ces organes. Cet avantage permet par conséquent d'améliorer significativement la fiabilité, la sécurité de vol et la maintenance de l'aéronef.

En outre, ce système hydraulique peut n'avoir aucune influence sur l'emplacement des fixations mécaniques d'un ensemble de plateaux cycliques, ce qui facilite son agencement.

Enfin, on comprend que l'enceinte protège de fait les organes agencés dans cette enceinte contre un éventuel impact avec un oiseau, par exemple.

Par ailleurs, le système hydraulique comporte une coupole destinée à entourer un moyeu d'un rotor, l'enceinte étant reliée à la coupole par un système rotatif autorisant un mouvement rotatif relatif entre l'enceinte et la coupole.

L'enceinte et la coupole peuvent favorablement représenter un ensemble fermé contenant les divers éléments d'un rotor, voire même partiellement ou totalement une boîte de transmission de puissance.

Le système hydraulique peut de plus comporter une ou plusieurs des caractéristiques qui suivent.

Ainsi, le système hydraulique peut comporter une unique enceinte, les corps d'une pluralité de servocommandes étant agencés dans cette enceinte.

Par exemple, toutes les servocommandes contrôlant un rotor sont agencées au moins partiellement dans une même enceinte.

Par ailleurs, au moins une servocommande peut être totalement agencée dans l'enceinte.

Cette caractéristique vise à limiter les risques de fuite de l'enceinte vers l'extérieur.

En outre, l'enceinte est favorablement étanche.

Par ailleurs, chaque piston séparant une chambre de rétraction et une chambre d'extension ménagées dans un corps, le système hydraulique peut comporter au moins un moyen d'étanchéité secondaire à fuite maitrisée, chaque moyen d'étanchéité secondaire à fuite maitrisée étant agencé entre au moins un corps et le piston coulissant dans ce corps pour autoriser une fuite d'un fluide hydraulique entre la chambre de rétraction et la chambre d'extension de ce corps.

Dès lors, la servocommande est dépourvue de joints dynamiques.

Par suite, la servocommande en résultant comprend au moins un moyen d'étanchéité principal à fuite maitrisée par corps, et un moyen d'étanchéité secondaire à fuite maitrisée par corps.

Cette caractéristique peut permettre d'augmenter significativement les performances dynamiques des servocommandes. En effet, ces performances ne sont plus limitées par la présence d'un joint dynamique.

Pour illustrer cet aspect, une servocommande de l'état de la technique munie de joints dynamiques conventionnels peut être sollicitée à une fréquence de l'ordre de quelques Hertz. A l'inverse, une servocommande selon l'invention à fuite maitrisée peut être sollicitée à une fréquence de l'ordre de plusieurs dizaines de Hertz.

Ainsi, au moins un moyen d'étanchéité peut comporter un palier hydrodynamique.

Un moyen d'étanchéité principal ou secondaire peut comprendre un tel palier hydrodynamique. Par exemple, un palier hydrodynamique est fixé sur un corps de servocommande en vis-à-vis de la tige de puissance de la servocommande, et / ou un palier hydrodynamique est fixé sur un piston en vis-à-vis d'une surface interne du corps de la servocommande.

Un palier hydrodynamique peut être une partie constitutive dudit corps ou dudit piston.

Ce palier hydrodynamique peut comporter des gorges de détente et/ou des segments de détente pour « casser » le débit de fuite d'un fluide traversant ce palier hydrodynamique.

Selon une première variante, le système hydraulique peut être fixé à un fuselage d'un aéronef.

Selon une deuxième variante, le système hydraulique peut comporter un carter d'une boîte de transmission de puissance dans lequel est agencé au moins un étage de réduction de vitesse, l'enceinte d'une servocommande étant fixée à ce carter.

Selon une troisième variante, l'enceinte comporte un carter d'une boîte de transmission de puissance dans lequel est agencé au moins un étage de réduction de vitesse.

Selon une quatrième variante, l'enceinte est agencée dans un carter d'une boîte de transmission de puissance dans lequel est agencé au moins un étage de réduction de vitesse.

Indépendamment de la variante, la boîte de transmission de puissance mentionnée peut être une boîte dite « boîte de transmission de puissance principale BTP » entraînant un rotor de sustentation, une boite dite « boîte de transmission de puissance arrière BTA » entraînant un rotor arrière contrôlant notamment le mouvement en lacet de l'aéronef, ou encore une boite dite « boîte de transmission de puissance intermédiaire BTI » par exemple. Cette liste est non limitative.

Le système hydraulique peut aussi comporter un réservoir de fluide en communication fluidique avec l'enceinte.

Le fluide s'échappant de manière maitrisée de la servocommande est recueilli dans l'enceinte, puis redirigé vers le réservoir d'un circuit hydraulique.

Ce réservoir peut potentiellement être partagé avec le réservoir d'une boite de transmission de puissance par exemple, afin de mutualiser le fluide. Ce réservoir peut alimenter en fluide les distributeurs des servocommandes, des boîtes de transmission de puissance, des pompes hydrauliques et certains composants hydrauliques, dans l'objectif d'optimiser la masse et le coût global de l'aéronef.

Cette mutualisation peut aussi présenter un aspect écologique en tendant à minimiser les quantités et types d'huiles utilisées par exemple.

Ainsi, le réservoir de fluide est éventuellement en communication fluidique notamment avec un distributeur hydraulique d'au moins une servocommande.

Par ailleurs, au moins une servocommande peut comporter un unique corps.

En agençant notamment un moyen d'étanchéité secondaire entre un piston et un corps, l'invention permet de maitriser la fuite d'un fluide d'une chambre à l'autre, et de prendre en considération cette fuite à la conception de la servocommande.

Cette maitrise des fuites permet d'envisager l'utilisation de servocommandes à simple corps au lieu de servocommandes à double corps. En revanche, une telle servocommande à simple corps peut être reliée à un distributeur hydraulique en communication fluidique avec un circuit hydraulique redondé.

La servocommande peut aussi être commandée par des commandes électriques. En effet, une servocommande à simple corps pilotée électriquement simplifie fortement l'architecture du système.

Outre un système hydraulique, l'invention vise un rotor muni d'un moyeu portant une pluralité de pales. Ce rotor comporte alors un système hydraulique du type décrit précédemment.

En outre, le rotor pouvant comporter un ensemble de plateaux cycliques relié à chaque pale par une bielle de pas, chaque servocommande étant reliée audit ensemble de plateaux cycliques, l'ensemble de plateaux cycliques peut être agencé dans l'enceinte. Chaque servocommande est reliée mécaniquement à chaque pale par l'ensemble de plateaux cycliques.

Selon une variante, les servocommandes peuvent être agencées en repère tournant sur le rotor. Par exemple, les servocommandes peuvent être agencées aux pieds des pales. Il est ainsi envisageable d'avoir une servocommande à sortie rotative plutôt que linéaire.

Cet agencement des organes du rotor au sein de l'enceinte peut tendre à réduire l'usure de ces organes, et notamment des rotules, de l'ensemble de plateaux cycliques et des compas qui sont lubrifiés par le fluide s'échappant des servocommandes.

Par ailleurs, l'invention vise aussi un aéronef comportant un rotor du type décrit précédemment.

La présente invention a aussi pour objet le procédé de fabrication du dispositif précité.

L'invention et ses avantages apparaîtront avec plus de détails dans le cadre de la description qui suit avec des exemples donnés à titre illustratif en référence aux figures annexées qui représentent :
- la figure 1, un schéma d'un rotor muni d'un système hydraulique selon une première variante,
- la figure 2, un schéma présentant une servocommande à fuite maitrisée,
- la figure 3, un schéma présentant des paliers hydrodynamiques comportant au moins une gorge,
- la figure 4, un schéma présentant des paliers hydrodynamiques comportant des segments,
- la figure 5 une servocommande à double corps selon l'invention,
- la figure 6, un schéma d'un rotor muni d'un système hydraulique selon une deuxième variante,
- la figure 7, un schéma d'un rotor muni d'un système hydraulique selon une troisième variante,
- la figure 8, un schéma d'un rotor muni d'un système hydraulique selon une quatrième variante, et
- la figure 9, un schéma présentant une enceinte associé à une coupole.

Les éléments présents dans plusieurs figures distinctes sont affectés d'une seule et même référence.

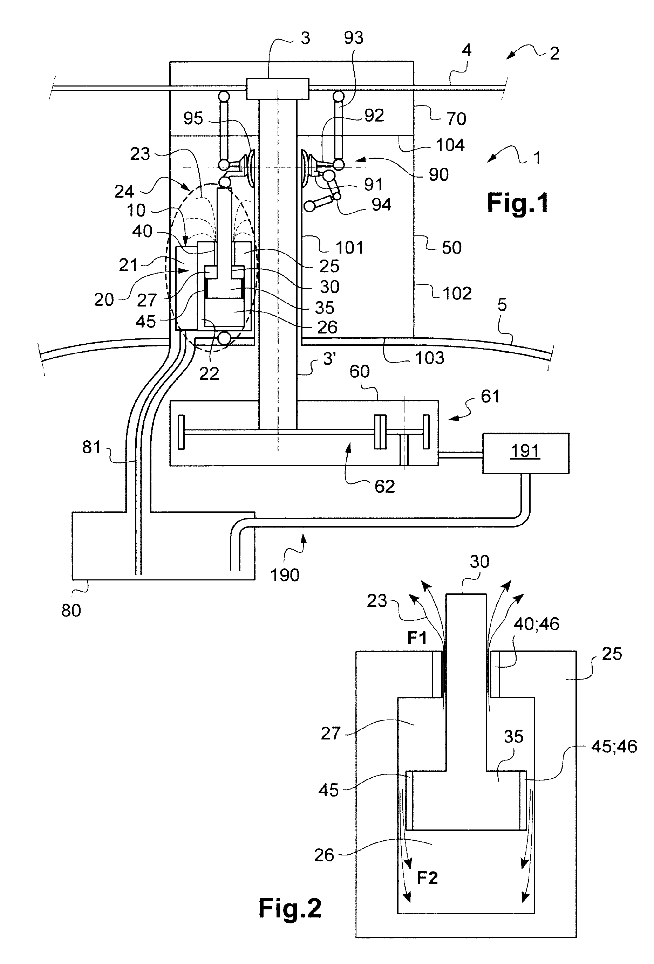

La figure 1 présente un aéronef 1 représenté partiellement.

Cet aéronef est muni d'un système hydraulique 10 selon une première variante pour contrôler des organes de manoeuvre de cet aéronef.

Selon l'exemple représenté, l'aéronef 1 comporte un rotor 2. Ce rotor 2 est muni d'un moyeu 3 portant une pluralité de pales 4. Le moyeu 3 est alors entrainé en rotation par une boîte de transmission de puissance 61 via un mât rotor 3'.

Dès lors, le système hydraulique agit sur la commande en pas des pales 4 du rotor 2.

Un tel rotor 2 peut être un rotor dit « rotor principal » assurant au moins partiellement la sustentation voire la propulsion de l'aéronef. Ce rotor 2 peut aussi être un rotor dit « rotor arrière » participant au contrôle du mouvement en lacet de l'aéronef.

Néanmoins, l'invention s'applique à tout type d'organes de manoeuvre d'un aéronef.

Indépendamment de la variante, le système hydraulique 10 comprend au moins une servocommande 20.

Par exemple, ce système hydraulique comporte trois ou quatre servocommandes 20 reliées à des commandes de vol de l'aéronef.

En outre, chaque servocommande 20 est par exemple articulée directement ou par au moins une bielle à un ensemble 90 de plateaux cycliques ou équivalant.

Ainsi, chaque servocommande 20 est par exemple articulée par une articulation à un ensemble 90 de plateaux cycliques ou équivalant. L'articulation peut être portée par une tige de puissance ou un corps de la servocommande. Eventuellement, au moins une bielle de la servocommande est interposée entre ladite tige de puissance ou ledit corps et ladite articulation.

Un tel ensemble 90 de plateaux cycliques comporte un plateau non tournant 91 articulé à un compas fixe 94.

De plus, l'ensemble 90 de plateaux cycliques inclut un plateau tournant 92 qui est articulé à un compas tournant non représenté. Ce compas est dit « tournant » étant solidaire en rotation du mât rotor 3' par exemple.

Le plateau tournant 92 est en outre relié à chaque pale 4 par une bielle de pas 93.

En outre, le plateau non tournant 91 et le plateau tournant 92 sont agencés sur une rotule 95 coulissant sur un mât d'entrainement en rotation du moyeu et donc du rotor.

Dès lors, chaque servocommande comporte un vérin 22 et un distributeur hydraulique 21. Le distributeur hydraulique 21 est en communication fluidique avec un circuit hydraulique et avec le vérin. Ce distributeur hydraulique est aussi relié à des commandes de vol électriques ou mécaniques par exemple, non représentées.

Le vérin 22 d'une servocommande comprend une tige de puissance 30 traversant au moins un corps 25. Cette tige de puissance 30 porte un piston 35 par corps. Chaque piston partage une cavité interne d'un corps en une chambre d'extension 26 et une chambre de rétraction 27 en communication fluidique avec le distributeur hydraulique.

Ainsi, les commandes de vol permettent de contrôler le distributeur hydraulique. Ce distributeur hydraulique injecte alors un fluide 23 dans les chambres d'extension du vérin pour étendre ce vérin, ou dans les chambres de rétraction du vérin pour rétracter ce vérin.

De plus, au moins une servocommande du système hydraulique est dimensionnée pour présenter une fuite 24 de fluide 23 maitrisée et prédéfinie. Par exemple, un vérin d'une servocommande est dimensionné pour présenter une fuite 24 de fluide 23 maitrisée et prédéfinie. Une telle servocommande est ainsi une servocommande à fuite maitrisée, et n'est pas assimilable à une servocommande présentant une fuite accidentelle résultant de l'usure de joints par exemple.

Favorablement, toutes les servocommandes du système hydraulique sont des servocommandes à fuite maitrisée selon l'invention.

Dès lors, chaque servocommande à fuite maitrisée comporte un moyen d'étanchéité principal 40 à fuite maitrisée à chaque interface entre une tige de puissance et un corps.

Ce moyen d'étanchéité principal 40 à fuite maitrisée autorise une fuite 24 du fluide 23 contenu dans un corps vers l'extérieur du vérin de la servocommande.

De plus, un moyen d'étanchéité secondaire 45 à fuite maitrisée est agencé entre au moins un corps 25 et le piston 35 coulissant dans ce corps.

Un tel moyen d'étanchéité secondaire 45 autorise alors une fuite d'un fluide hydraulique entre la chambre de rétraction 27 et la chambre d'extension 26 de ce corps 25.

Par suite, une telle servocommande peut être totalement dépourvue de joints sollicités dynamiquement.

En référence à la figure 2, au moins un moyen d'étanchéité comporte un palier hydrodynamique 46. Par exemple, chaque moyen d'étanchéité comporte un tel palier hydrodynamique.

Ainsi, lorsqu'un distributeur hydraulique alimente la chambre d'extension du corps représenté par des canaux non représentés, le fluide 23 s'échappe de la chambre de rétraction. Plus précisément, ce fluide s'échappe vers l'extérieur de la servocommande par un moyen d'étanchéité principal 40 selon les flèches F1, et vers la chambre d'extension par un moyen d'étanchéité secondaire 45 selon les flèches F2.

Le moyen d'étanchéité secondaire 45 autorise aussi une fuite de la chambre d'extension vers la chambre de rétraction.

Ces fuites sont calibrées et prises en compte par le constructeur lors de l'élaboration du système hydraulique.

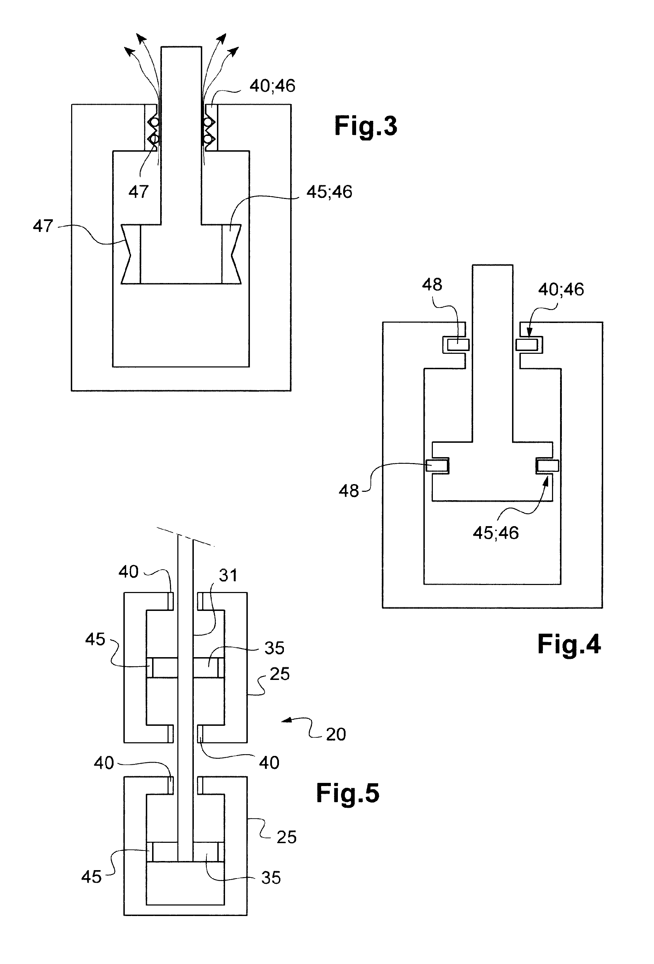

En référence à la figure 3, au moins un palier hydrodynamique peut comporter des gorges 47 de détente.

En référence à la figure 4, au moins un palier hydrodynamique 46 peut comporter des segments 48 de détente.

Par ailleurs, la servocommande est favorablement une servocommande à simple corps, à savoir une servocommande comportant un vérin muni d'un unique corps.

Cependant, la figure 5 illustre la réalisation d'une servocommande à multi-corps, plus précisément une servocommande comportant un vérin muni de deux corps selon l'exemple.

Sur cette figure 5, les deux corps sont agencés en tandem. Néanmoins, les deux corps peuvent être agencés en parallèle.

En outre, les circuits hydrauliques alimentant les corps peuvent être ségrégués.

En référence à la figure 1, le système hydraulique comporte au moins une enceinte 50 pour circonscrire la fuite de fluide en dehors d'au moins une servocommande 20 selon l'invention.

Au moins une servocommande est agencée au moins partiellement dans une enceinte 50. Favorablement, toutes les servocommandes de manoeuvre d'un organe sont agencées au moins partiellement dans une enceinte 50.

Plus précisément, les corps de chaque servocommande munis de moyens d'étanchéité primaires sont agencés dans une enceinte 50. Néanmoins, une servocommande à fuite maitrisée peut aussi être intégralement agencée dans une enceinte 50.

Dès lors, le fluide s'échappant d'une telle servocommande est recueilli par l'enceinte 50. Cette enceinte 50 peut être totalement étanche.

Dans le cadre d'un rotor, l'enceinte peut aussi accueillir d'autres équipements qui seront de fait lubrifiés par le fluide s'échappant de manière contrôlée des servocommandes. Par exemple, l'enceinte peut entourer le mât d'un rotor et accueillir l'ensemble 90 des plateaux cycliques.

Par exemple, l'enceinte comporte une paroi périphérique interne 101, une paroi périphérique externe 102, un fond 103 et un sommet 104. La rotule 95 de l'ensemble 90 de plateaux cycliques peut ainsi coulisser sur la paroi interne 101, cette paroi interne 101 entourant le mât 3' du rotor.

Par ailleurs, la servocommande peut être fixée à une paroi de l'enceinte, par exemple son fond 103.

De plus l'enceinte peut communiquer avec un circuit hydraulique pour permettre l'utilisation du fluide recueilli.

Ce circuit hydraulique peut être le circuit hydraulique alimentant les distributeurs hydrauliques des servocommandes à fuite maitrisée, et peut être mutualisé avec d'autres équipements.

Par exemple, l'enceinte est en communication fluidique, par exemple par gravité, avec un réservoir 80. Ce réservoir 80 est éventuellement en communication fluidique avec un distributeur hydraulique 21 d'au moins une servocommande 20, voire avec un circuit hydraulique 190. Un tel circuit hydraulique peut être le circuit hydraulique 191 d'une boîte de transmission de puissance.

Selon la première variante de la figure 1, l'enceinte 50 est fixée à une structure de l'aéronef, par exemple à un cadre du fuselage 5.

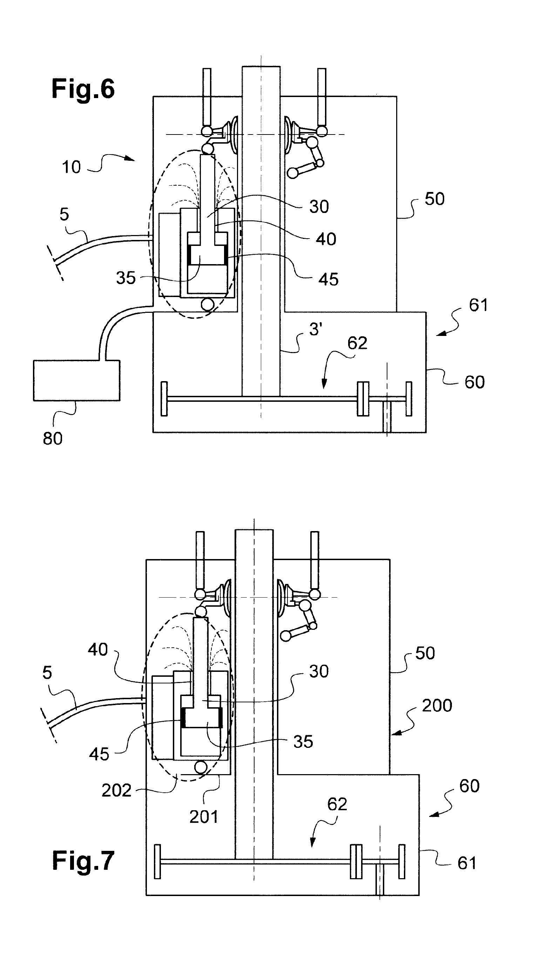

Selon la deuxième variante de la figure 6, l'enceinte 50 est fixée sur le carter 60 d'une boîte de transmission de puissance 61. Par exemple cette boîte de transmission de puissance 61 comporte au moins un étage 62 de réduction de vitesse pour mettre en rotation le mât 3' d'un rotor.

Selon la troisième variante de la figure 7, l'enceinte 50 comporte le carter 60 d'une boîte de transmission de puissance.

Par suite, l'enceinte 50 et le carter 60 forment conjointement une seule et unique enveloppe 200. Les étages de réduction de vitesse de la boîte de transmission et au moins une servocommande à fuite maitrisée sont disposés dans cette enveloppe.

Eventuellement, l'enveloppe peut comporter des séparations 201 ajourées. Par exemple, une séparation 201 munie de lumières 202 est disposée entre un compartiment de l'enveloppe accueillant au moins un étage de réduction de vitesse et un compartiment de l'enveloppe accueillant au moins une servocommande.

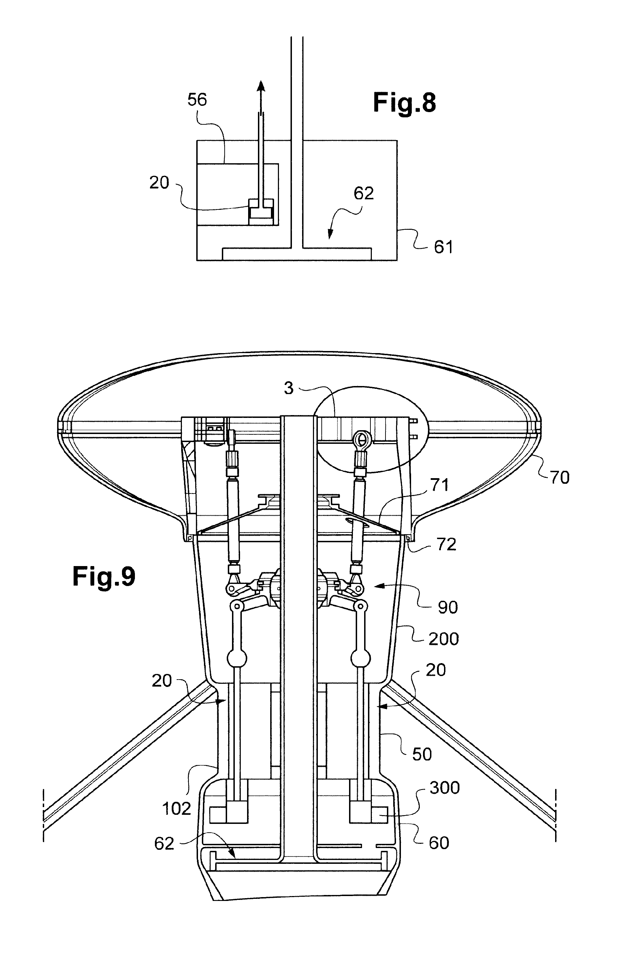

Selon la quatrième variante de la figure 8, l'enceinte peut aussi être disposée au sein d'un carter 60 d'une boîte de transmission de puissance.

Indépendamment de la variante et en référence à la figure 9, l'enceinte peut coopérer avec une coupole 70 d'un moyeu 3.

Ainsi, l'enceinte 50 peut être reliée à une coupole 70 par un système rotatif, tel qu'un moyen de roulement à billes ou à rouleaux par exemple. Une cloison 71 ajourée peut être disposée entre le moyeu 3 agencé dans la coupole et les servocommandes 20 agencées dans l'enceinte. Des bielles de pas peuvent notamment traversées cette cloison.

La figure 9 présente aussi des moyens de fixation 300 permettant de fixer chaque servocommande 20 à une paroi périphérique externe 102 de l'enceinte 50. L'enceinte 50 peut être dépourvue de paroi périphérique interne, le mât 3' pouvant remplir cette fonction.

En outre, l'enceinte 50 de la figure 9 forme une enveloppe 200 conjointement avec le carter de la boîte de transmission de puissance 60.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système hydraulique (10) d'aéronef (1) comprenant au moins une servocommande (20), chaque servocommande (20) comportant au moins un corps (25) ainsi qu'une tige de puissance (30) et un piston (35) agencé dans chaque corps (25), ladite tige de puissance (30) d'une servocommande (20) étant solidaire de chaque piston (35) de la servocommande (20), ladite tige de puissance (30) d'une servocommande (20) traversant chaque corps (25) de la servocommande (20), au moins une servocommande (20) présentant entre chaque corps (25) de cette servocommande (20) et la tige de puissance (30) de cette servocommande (20) un moyen d'étanchéité principal (40) à fuite maitrisée autorisant une fuite d'un fluide (23) hydraulique en dehors dudit corps (25), ledit système hydraulique (10) comportant au moins une enceinte (50), chaque corps (25) de ladite servocommande (20) étant agencé dans ladite enceinte (50) afin que ledit fluide (23) soit recueilli dans ladite enceinte (50),
**caractérisé en ce que** ledit système hydraulique (10) comporte une coupole (70) destinée à entourer un moyeu (3) d'un rotor (2) d'aéronef, ladite enceinte (50) étant reliée à ladite coupole (70) par un système rotatif (72) autorisant un mouvement rotatif relatif entre ladite enceinte (50) et ladite coupole (70).

2. Système selon la revendication 1,
**caractérisé en ce que** ledit système hydraulique (10) comporte une unique enceinte (50), les corps (25) d'une pluralité de servocommandes (20) étant agencés dans ladite enceinte (50).

3. Système selon l'une quelconque des revendications 1 à 2,
**caractérisé en ce que** au moins une servocommande (20) est totalement agencée dans ladite enceinte (50).

4. Système selon l'une quelconque des revendications 1 à 3,
**caractérisé en ce que** ladite enceinte (50) est étanche.

5. Système selon l'une quelconque des revendications 1 à 4,
**caractérisé en ce que**, chaque piston (35) séparant une chambre de rétraction (27) et une chambre d'extension (26) ménagées dans un corps (25), ledit système hydraulique (10) comporte au moins un moyen d'étanchéité secondaire (40) à fuite maitrisée, chaque moyen d'étanchéité secondaire (40) à fuite maitrisée étant agencé entre au moins un corps (25) et le piston (35) coulissant dans ce corps (25) pour autoriser une fuite d'un fluide hydraulique entre la chambre de rétraction (27) et la chambre d'extension (26) de ce corps (25).

6. Système selon l'une quelconque des revendications 1 à 5,
**caractérisé en ce qu'**au moins un moyen d'étanchéité (40, 45) comporte un palier hydrodynamique (46).

7. Système selon la revendication 6,
**caractérisé en ce que** ledit palier hydrodynamique (46) comporte des gorges (47) de détente.

8. Système selon l'une quelconque des revendications 6 à 7,
**caractérisé en ce que** ledit palier hydrodynamique (46) comporte des segments (48) de détente.

9. Système selon l'une quelconque des revendications 1 à 8,
**caractérisé en ce que** ledit système hydraulique (10) comporte un carter (60) d'une boîte de transmission de puissance (61) dans lequel est agencé au moins un étage (62) de réduction de vitesse, ladite enceinte (50) étant fixée audit carter (60).

10. Système selon l'une quelconque des revendications 1 à 8,
**caractérisé en ce que** ladite enceinte (50) comporte un carter (60) d'une boîte de transmission de puissance (61) dans lequel est agencée au moins un étage (62) de réduction de vitesse.

11. Système selon l'une quelconque des revendications 1 à 8,
**caractérisé en ce que** ladite enceinte (50) est agencée dans un carter (60) d'une boîte de transmission de puissance (61) dans lequel est agencé au moins un étage (62) de réduction de vitesse.

12. Système selon l'une quelconque des revendications 1 à 11,
**caractérisé en ce que** ladite servocommande comporte une articulation pour être articulée à un ensemble (90) de plateaux cycliques d'un rotor relié à chaque pale (4) dudit rotor par une bielle (93) de pas.

13. Système selon l'une quelconque des revendications 1 à 12,
**caractérisé en ce que** ledit système hydraulique (10) comporte un réservoir (80) de fluide en communication fluidique avec ladite enceinte (50).

14. Système selon la revendication 13,
**caractérisé en ce que** ledit réservoir (80) de fluide est en communication fluidique avec un distributeur hydraulique (21) d'au moins une servocommande (20).

15. Système selon l'une quelconque des revendications 1 à 14,
**caractérisé en ce qu'**au moins une servocommande (20) comporte un unique corps (25).

16. Rotor muni d'un moyeu portant une pluralité de pales,
**caractérisé en ce que** ledit rotor (2) comporte un système hydraulique (10) selon l'une quelconque des revendications 1 à 15, chaque servocommande (20) étant reliée mécaniquement à chaque pale (4).

17. Rotor selon la revendication 16,
**caractérisé en ce que** ledit rotor (2) comporte un ensemble (90) de plateaux cycliques relié à chaque pale (4) par une bielle (93) de pas, chaque servocommande (20) étant reliée audit ensemble (93) de plateaux cycliques, ledit ensemble (90) de plateaux cycliques étant agencé dans ladite enceinte (50).

18. Aéronef,
**caractérisé en ce que** ledit aéronef (1) comporte un rotor (2) selon l'une quelconque des revendications 16 à 17.

## Patentansprüche

1. Hydraulisches System (10) eines Luftfahrzeugs (1) mit mindestens einer Servosteuerung (20), wobei jede Servosteuerung (20) mindestens einen Körper (25) sowie eine Kraftübertragungsstange (30) und einen Kolben (35), der in jedem Körper (25) angeordnet ist, aufweist, wobei die Kraftübertragungsstange (30) einer Servosteuerung (20) mit jedem Kolben (35) der Servosteuerung (20) fest verbunden ist, wobei die Kraftübertragungsstange (30) einer Servosteuerung (20) jeden Körper (25) der Servosteuerung (20) durchquert, wobei mindestens eine Servosteuerung (20) zwischen jedem Körper (25) dieser Servosteuerung (20) und der Kraftübertragungsstange (30) dieser Servosteuerung (20) ein Hauptdichtungsmittel (40) mit kontrollierter Leckrate, die das Austreten eines Hydraulikfluids (23) aus dem Körper (25) erlaubt, aufweist, wobei das hydraulische System (10) mindestens ein Gehäuse (50) aufweist, wobei jeder Körper (25) der Servosteuerung (20) in dem Gehäuse (50) angeordnet ist, damit das Fluid (23) in dem Gehäuse (50) aufgefangen wird,
**dadurch gekennzeichnet, dass** das hydraulische System (10) eine Kuppel (70) aufweist, die eine Nabe (3) eines Rotors (2) eines Luftfahrzeugs umgibt, wobei das Gehäuse (50) mit der Kuppel (70) über ein drehbares System (72) verbunden ist, das eine relative Drehbewegung zwischen dem Gehäuse (50) und der Kuppel (70) erlaubt.

2. System nach Anspruch 1,
**dadurch gekennzeichnet, dass** das hydraulische System (10) ein einziges Gehäuse (50) aufweist, wobei die Körper (25) einer Mehrzahl von Servosteuerungen (20) in dem Gehäuse (50) angeordnet sind.

3. System nach einem der Ansprüche 1 bis 2,
**dadurch gekennzeichnet, dass** mindestens eine Servosteuerung (20) vollständig in dem Gehäuse (50) angeordnet ist.

4. System nach einem der Ansprüche 1 bis 3,
**dadurch gekennzeichnet, dass** das Gehäuse (50) dicht ist.

5. System nach einem der Ansprüche 1 bis 4,
**dadurch gekennzeichnet, dass** jeder Kolben (35) eine Rückzugskammer (27) und eine Ausdehnungskammer (26) trennt, die in einem Körper (25) angeordnet sind, wobei das hydraulische System (10) mindestens ein sekundäres Dichtungsmittel (40) mit kontrollierter Leckrate aufweist, wobei jedes sekundäre Dichtungsmittel (40) mit kontrollierter Leckrate zwischen mindestens einem Körper (25) und dem Kolben (35) angeordnet ist, der in diesem Körper (25) gleitet, um ein Austreten eines Hydraulikfluids zwischen der Rückzugskammer (27) und der Ausdehnungskammer (26) dieses Körpers (25) zu erlauben.

6. System nach einem der Ansprüche 1 bis 5,
**dadurch gekennzeichnet, dass** das mindestens eine Dichtungsmittel (40, 45) ein hydrodynamisches Lager (46) aufweist.

7. System nach Anspruch 6,
**dadurch gekennzeichnet, dass** das hydrodynamische Lager (46) Entlastungsnuten (47) aufweist.

8. System nach einem der Ansprüche 6 bis 7,
**dadurch gekennzeichnet, dass** das hydrodynamische Lager (46) Entlastungsringe (48) aufweist.

9. System nach einem der Ansprüche 1 bis 8,
**dadurch gekennzeichnet, dass** das hydraulische System (10) eine Wanne (60) eines Leistungsgetriebes (61) aufweist, in der mindestens eine Geschwindigkeitsreduktionsstufe (62) angeordnet ist, wobei das Gehäuse (50) an der Wanne (60) befestigt ist.

10. System nach einem der Ansprüche 1 bis 8,
**dadurch gekennzeichnet, dass** das Gehäuse (50) eine Wanne (60) eines Leistungsgetriebes (61) aufweist, in der mindestens eine Geschwindigkeitsreduktionsstufe (62) angeordnet ist.

11. System nach einem der Ansprüche 1 bis 8,
**dadurch gekennzeichnet, dass** das Gehäuse (50) in einer Wanne (60) eines Leistungsgetriebes (61) angeordnet ist, in der mindestens eine Geschwindigkeitsreduktionsstufe (62) angeordnet ist.

12. System nach einem der Ansprüche 1 bis 11,
**dadurch gekennzeichnet, dass** die Servosteuerung ein Gelenk aufweist, mit dem sie an einer Einheit (90) aus zyklischen Platten eines Rotors angelenkt ist, die mit jedem Rotorblatt (4) des Rotors über eine Neigungswinkel-Verstellstange (93) verbunden ist.

13. System nach einem der Ansprüche 1 bis 12,
**dadurch gekennzeichnet, dass** das hydraulische System (10) einen Fluidtank (80) aufweist, der mit dem Gehäuse (50) in fluidischer Verbindung steht.

14. System nach Anspruch 13,
**dadurch gekennzeichnet, dass** der Fluidtank (80) in fluidischer Verbindung mit einem hydraulischen Verteiler (21) mindestens einner Servosteuerung (20) steht.

15. System nach einem der Ansprüche 1 bis 14,
**dadurch gekennzeichnet, dass** mindestens eine Servosteuerung (20) einen einzigen Körper (25) aufweist.

16. Rotor mit einer Nabe, die eine Mehrzahl von Rotorblättern trägt,
**dadurch gekennzeichnet, dass** der Rotor (2) ein hydraulisches System (10) nach einem der Ansprüche 1 bis 15 aufweist, wobei jede Servosteuerung (20) mechanisch mit jedem Rotorblatt (4) verbunden ist.

17. Rotor nach Anspruch 16,
**dadurch gekennzeichnet, dass** der Rotor (2) eine Einheit (90) zyklischer Platten aufweist, die mit jedem Rotorblatt (4) über eine Neigungswinkel-Verstellstange (93) verbunden ist, wobei jede Servorsteuerung (20) mit der Einheit (93) aus zyklischen Platten verbunden ist, wobei die Einheit (90) aus zyklischen Platten in dem Gehäuse (50) angeordnet ist.

18. Luftfahrzeug,
**dadurch gekennzeichnet, dass** das Luftfahrzeug (1) einen Rotor (2) nach einem der Ansprüche 16 bis 17 aufweist.

## Claims

1. A hydraulic system (10) for an aircraft (1), comprising at least one servo control (20), each servo control (20) having at least one body (25) and a power rod (30) and a piston (35) that is arranged in each body (25), said power rod (30) of a servo control (20) being integrally formed with each piston (35) of the servo control (20), said power rod (30) of a servo control (20) passing through each body (25) of the servo control (20), at least one servo control (20) having, between each body (25) of this servo control (20) and the power rod (30) of this servo control (20), a principal controlled-leak sealing means (40) which authorises a leak of a hydraulic fluid (23) outside said body (25), said hydraulic system (10) having at least one enclosure (50), each body (25) of said servo control (20) being arranged in said enclosure (50) such that said fluid (23) is collected in said enclosure (50), **characterised in that** said hydraulic system (10) has a cap (70) intended to surround a hub (3) of an aircraft rotor (2), said enclosure (50) being connected to said cap (70) by a rotational system (72) which authorises a relative rotary movement between said enclosure (50) and said cap (70).

2. A system according to Claim 1, **characterised in that** said hydraulic system (10) has a single enclosure (50), the bodies (25) of a plurality of servo controls (20) being arranged in said enclosure (50).

3. A system according to any one of Claims 1 to 2, **characterised in that** at least one servo control (20) is arranged entirely within said enclosure (50).

4. A system according to any one of Claims 1 to 3, **characterised in that** said enclosure (50) is sealed.

5. A system according to any one of Claims 1 to 4, **characterised in that**, each piston (35) separating a retraction chamber (27) and an extension chamber (26) that are made in a body (25), said hydraulic system (10) has at least one secondary controlled-leak sealing means (40), each secondary controlled-leak sealing means (40) being arranged between at least one body (25) and the piston (35) that slides in this body (25), for authorising a leak of a hydraulic fluid between the retraction chamber (27) and the extension chamber (26) of this body (25).

6. A system according to any one of Claims 1 to 5, **characterised in that** at least one sealing means (40, 45) has a hydrodynamic bearing (46).

7. A system according to Claim 6, **characterised in that** said hydrodynamic bearing (46) has relaxation grooves (47).

8. A system according to any one of Claims 6 to 7, **characterised in that** said hydrodynamic bearing (46) has relaxation segments (48).

9. A system according to any one of Claims 1 to 8, **characterised in that** said hydraulic system (10) has a casing (60) of a power transmission box (61) in which there is arranged at least one speed reduction stage (62), said enclosure (50) being fixed to said casing (60).

10. A system according to any one of Claims 1 to 8, **characterised in that** said enclosure (50) has a casing (60) of a power transmission box (61) in which there is arranged at least one speed reduction stage (62).

11. A system according to any one of Claims 1 to 8, **characterised in that** said enclosure (50) is arranged in a casing (60) of a power transmission box (61) in which there is arranged at least one speed reduction stage (62).

12. A system according to any one of Claims 1 to 11, **characterised in that** said servo control has an articulation for being articulated to a swashplate assembly (90) of a rotor that is connected to each blade (4) of said rotor by a pitch rod (93).

13. A system according to any one of Claims 1 to 12, **characterised in that** said hydraulic system (10) has a reservoir (80) of fluid that is in fluid communication with said enclosure (50).

14. A system according to Claim 13, **characterised in that** said reservoir (80) of fluid is in fluid communication with a hydraulic distributor (21) of at least one servo control (20).

15. A system according to any one of Claims 1 to 14, **characterised in that** at least one servo control (20) has a single body (25).

16. A rotor equipped with a hub bearing a plurality of blades, **characterised in that** said rotor (2) has a hydraulic system (10) according to any one of Claims 1 to 15, each servo control (20) being mechanically connected to each blade (4).

17. A rotor according to Claim 16, **characterised in that** said rotor (2) has a swashplate assembly (90) that is connected to each blade (4) by a pitch rod (93), each servo control (20) being connected to said swashplate assembly (93), said swashplate assembly (93) being arranged in said enclosure (50).

18. An aircraft, **characterised in that** said aircraft (1) has a rotor (2) according to any one of Clams 16 to 17.
